(19) Europäisches Patentamt
European Patent Office
Office européen des brevets

(11) **EP 4 346 452 B1**

(12) **EUROPEAN PATENT SPECIFICATION**

(45) Date of publication and mention
of the grant of the patent:
**18.03.2026 Bulletin 2026/12**

(21) Application number: **22724456.3**

(22) Date of filing: **21.04.2022**

(51) International Patent Classification (IPC):
***A23N 12/08*** (2006.01)      ***A23N 12/12*** (2006.01)

(52) Cooperative Patent Classification (CPC):
**A23N 12/08; A23N 12/125**

(86) International application number:
**PCT/EP2022/060623**

(87) International publication number:
**WO 2022/253488 (08.12.2022 Gazette 2022/49)**

(54) **APPARATUS AND METHOD FOR ROASTING COFFEE BEANS**

VORRICHTUNG UND VERFAHREN ZUM RÖSTEN VON KAFFEEBOHNEN

APPAREIL ET PROCÉDÉ DE TORRÉFACTION DE GRAINS DE CAFÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2021 EP 21176806**

(43) Date of publication of application:
**10.04.2024 Bulletin 2024/15**

(73) Proprietor: **Société des Produits Nestlé S.A.
1800 Vevey (CH)**

(72) Inventors:
• **SAVIOZ, Grégory
1966 Saxonne (CH)**

• **MONNIER, Pierre
1464 Chavannes-le-Chêne (CH)**
• **RACINE, Hugues
25300 Pontarlier (FR)**

(74) Representative: **Pasquino, Fabio
Société des Produits Nestlé S.A.
Avenue Nestlé 55
1800 Vevey (CH)**

(56) References cited:
**WO-A1-2013/108283      WO-A1-2020/130347
KR-A- 20140 107 850      KR-A- 20150 131 599
US-A1- 2012 265 364      US-A1- 2019 373 940**

**Description**

**1. Field of the invention**

The present invention relates to an apparatus and a method for roasting coffee beans.

**2. Technical background**

In coffee roasting, unroasted coffee beans are transformed into roasted coffee beans. The unroasted coffee beans are typically green and/or dried coffee beans, and the roasted coffee beans particularly contribute to the flavor of the coffee beverage, which is prepared from the (grinded) roasted coffee beans. Roasting the coffee beans can be on a large scale, but also on a small scale. In small scale roasting of coffee beans, the business to the business (a shop, a coffee shop, etc.) or business to consumer or customer, e.g. the consumer of the coffee beverage, roasts the coffee beans. Roasting coffee beans by the consumer is very interesting, since the consumer can roast the coffee beans at home in order to experiment with different flavor profiles and in order to ensure a particularly fresh roast of the coffee beans, for example as a hobby.

Coffee roasting is a delicate process influenced by a great number of internal and external factors. Some of these factors can be controlled by the apparatus, such as the fan speed, temperature, and time, but some others are dependent on environmental or room conditions (atmospheric pressure, humidity, temperature, etc.) in which the apparatus is placed. It becomes especially true for home appliance apparatuses (i.e., in-home apparatuses or machines) where these external conditions can greatly vary depending on the country, altitude, weather conditions, etc. For example, atmospheric pressure varies with altitude in a range of 10-12 hPa/100m, and weather does have an influence on pressure as well. Varying atmospheric pressure impacts notably the airflow required for roasting. Further, humidity control is key during the roasting process so that a too high humidity can adversely affect the quality of the roasting result. In addition, taking into account these and other conditions such as temperature is difficult, because coffee roasting is often done in open loop with a priori instructions.

An apparatus for roasting coffee according to the prior art is known from US 2019/373940 A1.

Therefore, it is an object of the present invention to provide an apparatus and method, which overcome the afore-mentioned drawbacks. That is, it is in particular an object of the present invention to provide an apparatus and a method, which more easily guarantee consistent coffee roasting results in different environmental conditions.

These and other objects, which become apparent upon reading the following description, are solved by the subject matter of the independent claims. The dependent claims refer to preferred embodiments of the invention.

**3. Summary of the invention**

According to the invention, an apparatus for roasting coffee beans is provided. The apparatus comprises: a chamber in which coffee beans can be received for roasting; a device for roasting the coffee beans received in the chamber; a control unit configured to control the device; and one or more sensors arranged to detect a condition of the air that surrounds the apparatus. The control unit is configured to control the device based on the detected condition, wherein the control unit is configured to bring the apparatus in a warning mode based on the detected condition, such as when the detected condition being the temperature of the air is above or below a defined value and/or when the detected condition being the humidity of the air is above or below a defined value, wherein the control unit is configured to prevent operation of the device when the apparatus is in the warning mode.

Hence, the apparatus is able to adapt automatically to different environmental (or room) conditions that are effected by different conditions of the air that surrounds the apparatus. In other words, the apparatus takes the condition of the surrounding air into account and translates them, with the control unit, into actionable control instructions for the device for roasting the coffee beans. On the one hand, this advantageously effects good coffee roasting results, because the apparatus considers the respective condition of the air that could adversely affect the roasting process of the coffee beans. That is, the apparatus is able to detect the condition and to accordingly adjust one or more parameters of the device. Thereby, the roasting result does not change in different conditions of the air in the environment of the apparatus. As such, a user of the apparatus can use the apparatus in different conditions of the air, such as in different countries, altitudes, or weather conditions, without manually adjusting the (factory) settings of the apparatus in order to achieve the desired roasting result.

On the other hand, the apparatus facilitates an easy and cost-effective way for controlling the device. Namely, by adjusting the roasting based on the detected condition of the air, the control of the roasting can be facilitated without complexly arranging sensors, such as without arranging, or at least a reduced number of, sensors inside of the chamber or in close vicinity of the device. For example, based on the detected condition of the air, the control unit can calculate an expected roasting profile having expected roasting parameters (temperature, time, etc.), which profile is effected with the respectively set parameters of the device, and then adjust these parameters in order to effect the desired roasting profile. As such, the control unit may boost the device in order to effect the desired roasting profile having a shorter roasting time.

For example, the apparatus may be adapted to roast coffee beans according to a set (e.g., factory set) roasting profile that depends on one or more roasting parameters (i.e., one or more pre-defined control parameters) that can be varied by the device. Then, the control unit is configured to control the device based on the detected condition, thereby varying the one or more parameters of the device and thus adjusting the roasting profile. The roasting profile is then advantageously adapted to the respective condition of the air, thereby achieving a coffee roasting with a good/consistent quality. The roasting parameters may include roasting time ($t_R$), roasting temperature ($T_R$), and/or a flow rate of the air used for roasting or a fan speed ($V_R$). As such, the roasting profile (R) may be according to the following function:

$$R = f(V_R, t_R) \,\&\, g(T_R, t_R)$$

In an embodiment, the apparatus may be configured such that when starting the apparatus (such as powering up the apparatus) the control unit adapts or adjusts, based on the detected condition, one or more parameters of the device and/or of the roasting profile (or recipe). This may be done in a calibration process in the phase of starting the apparatus.

The control unit may be configured to control the device (e.g., the "one or more parameters" of the device above) based on a pre-defined default control parameter and to adjust this parameter based on a difference between the detected condition and a pre-defined default condition related (or correlated or linked) to the pre-defined default control parameter. For example, if the detected condition corresponds to the pre-defined default condition, the control unit does not adjust the pre-defined default control parameter. In other words, the apparatus then works in a normal environmental condition being defined by the pre-defined default condition. If the detected condition however deviates from the pre-defined default condition (i.e., there is in fact a difference between these conditions), e.g. the detected condition being temperature, pressure, and/or humidity is below or above the pre-defined default condition, the control unit adjusts the pre-defined default control parameter. The device will then be operated differently, e.g. with a lower or higher fan speed (such as to overcome differences in air density and flow), or with a lower or higher heating power.

Hence, the control unit may advantageously adjust the pre-defined default control parameter without calculating a difference between the detected condition and a condition present in the chamber, such as a pressure in the chamber. Therefore, control of the device is simplified.

The apparatus may store, and/or may be configured to retrieve (such as via a communication interface), the pre-defined default control parameter (i.e., one or more pre-defined default control parameters) and/or pre-defined default condition (i.e., one or more pre-defined default conditions, respectively). The apparatus may store the pre-defined default control parameter and/or pre-defined default condition on the control unit or a storage device. The apparatus may be configured to retrieve the pre-defined default control parameter and/or pre-defined default condition from an entity (or object) that is not part of, and/or remote from, the apparatus; i.e. the pre-defined default control parameter and/or pre-defined default condition may be stored externally. For example, the apparatus may be configured to retrieve the pre-defined default control parameter and/or pre-defined default condition from a code such as a barcode (1D, 2D, etc.), i.e. by code reading or product recognition. Additionally or alternatively, the apparatus may be configured to retrieve the pre-defined default control parameter and/or pre-defined default condition from a remote server or cloud.

The apparatus may store, and/or may be configured to retrieve (such as via a communication interface), one or more roasting profiles, wherein the control unit is configured to control the device based on the one or more roasting profiles and to adjust or adapt the one or more roasting profiles based on the detected condition. The apparatus may store the one or more roasting profiles on the control unit or a storage device. The apparatus may be configured to retrieve the one or more roasting profiles from an entity (or object) that is not part of, and/or remote from, the apparatus. For example, the apparatus may be configured to retrieve the one or more roasting profiles from a code such as a barcode (1D, 2D, etc.), i.e. by code reading or product recognition. Additionally or alternatively, the apparatus may be configured to retrieve the one or more roasting profiles from a remote server or cloud. For example, a type of coffee beans (such as a coffee bean product) is linked to a respective roasting profile. As such, the roasting profile defines one or more pre-defined control parameters of the apparatus, which are tailored (or adapted) to the respective type of coffee beans. Hence, a good quality of the roasting of the respective type of coffee beans can be ensured.

The one or more pre-defined default control parameters may be represented by (or defined by or be part of) the one or more roasting profiles. In other words, the roasting profiles each may comprise the or at least one of the pre-defined default control parameters. As such, the detected condition may be used to adapt (or shift) the pre-defined default control parameter being the fan speed instruction of one or more roasting recipes. In other words, the detected condition will thus define "working parameters" (or shifting factors) of the apparatus, such as during its initialization. Optionally, subsequent roasting profiles, whatever the product or type of coffee beans, will then be affected by these parameters (once translated into actionable roasting parameters, such as for fan speed, temperature, time) until the next initialization of the apparatus is done (e.g. reboot).

The condition of the air may comprise pressure. The condition may comprise temperature (such as a room temperature). The condition may comprise humidity. In an embodiment, only one sensor is configured to detect a plurality of conditions. In another embodiment, each of the plurality of sensors is configured to detect a respective condition. For example, the apparatus may comprise a temperature sensor for detecting the condition being the temperature, a pressure sensor for detecting the condition being the pressure, and/or a humidity sensor for detecting the condition being the humidity. The pressure sensor may be designed to work (e.g., only) in an atmospheric pressure range from 700 to 1050 hPa. The temperature sensor may be designed to work (e.g., only) in an ambient temperature range from 5 to 40 °C. The humidity sensor may be designed to work in a humidity range from 20 to 100%.

The one or more sensors may be arranged to exclusively detect the condition. In other words, the one or more sensors may be arranged such that they are prevented from detecting a condition of the chamber and/or device. As such, the one or more sensors can reliably detect the condition of the air surrounding the apparatus, without any noise coming from other parts of the apparatus, such as heat coming from, or radiated by, the chamber and/or device.

The apparatus may comprise a section that is subjected to or in contact with the air that surrounds the apparatus, wherein at least one or each of the one or more sensors is arranged on the section. Hence, the respective condition of the air is reliably measured.

The apparatus may comprise a thermally isolated section that is thermally isolated from the device and/or chamber. This thermal isolation may be effected by a thermal insulation, such as by a thermally insulating material. At least one or each of the one or more sensors is arranged on the thermally isolated section. Thereby, the one or more sensors are arranged (or located) on non-heat sensitive parts of the apparatus. This is in particular advantageous for a sensor arranged to detect the condition being the temperature of the air, because the termally isolated section effects that the sensor is thermally isolated from the device and/or chamber. As such, the conition being the temperature of the air can be reliably measured, in particular without any noise due to heat coming from the device and/or chamber. Preferably, the section comprises the thermally isolated section.

The apparatus may comprise a housing that houses at least the chamber and the device. The housing may be designed for easy transportation and/or for using the apparatus in a compact manner, e.g. for using the apparatus at home, i.e. as a home appliance apparatus. The air surrounding the housing thus represents the air surrounding the apparatus. The housing may comprise the section and/or the thermally isolated section. Additionally or alternatively, the section and/or the thermally isolated section may be arranged (located) in the apparatus (e.g., in the housing), such as on a PCB and/or on a main board.

The device may comprise a flow device arranged to generate a current of air in the chamber for roasting coffee beans, wherein the control unit is configured to control, based on the detected condition, a parameter of the flow device, such as a flow rate and/or a fan speed. This advantageously effects that the roasting level of coffee beans has the desired quality even in a state, in which the (fresh) air that is drawn by the flow device from the air surrounding the apparatus is in a different condition, e.g. because of a different altitude. In other words, the apparatus prevents that the airflow is different at different altitudes, thereby maintaining the desired roasting level, i.e. preventing different roasting levels due to different altitudes. Particularly in combination with a flow device adapted for fluid bed roasting a consistent quality of coffee roasting is thus achieved, because the control of the parameter of the flow device effects a good tradeoff between bean movement and dispersion of the calories in the air.

Preferably, the control unit is configured to control, based on the detected condition, the parameter of the flow device such that the flow rate and/or fan speed is decreased (e.g. when the detected condition being the pressure of the air increases and/or is above a threshold value) or increased (e.g. when the detected condition being the pressure of the air decreases and/or is below a threshold value). For example, if the control unit determines that the detected condition increases from or above the threshold value (such as the pre-determined condition, e.g. a (normal) pressure), the control unit may control the parameter of the flow device such that the flow rate and/or fan speed decreases, e.g., linearly. Similarly, if the control unit determines that the detected condition decreases from or below the threshold value (such as the pre-determined condition, e.g. a (normal) pressure), the control unit may control the parameter of the flow device such that the flow rate and/or fan speed increases, e.g., linearly.

For example, when the detected condition being the pressure is $P_m$, a reference pressure is $P_{ref}$, and a (factory) set flow rate or fan speed is $V_R$, the control unit may control the flow device to achieve a target flow rate V according to the following equations:

$$V = V_R + A*(P_m - P_{ref}) \text{ or } V = h(P_m - P_{ref})*V_R,$$

wherein A is a (preferably constant) factor (a so called "pressure compensation factor").

The apparatus may not comprise a sensor for detecting the actual flow rate of the current of air generated by the flow device. As such, a very simple and cost-effective design of the apparatus is provided. This in particular because the one or more sensors indirectly provide the function of the sensor that detects the actual flow rate.

The flow device may be arranged to generate a current of air in order to agitate the coffee beans received by the chamber. The agitation of the coffee beans is particularly advantageous for a well roasting of the coffee beans. The flow device may be configured to generate the current of air such that, due to the introduction of the current of air into the chamber, a fluidized bed is effected.

The fluidized bed then comprises the coffee beans, thereby agitating the coffee beans. The apparatus may thus be a fluid bed coffee roaster. In other words, the flow device may be adapted for fluid bed technology.

The device may comprise a heating device arranged to heat up air that is used in the chamber for roasting coffee beans, such as the current of air generated by the flow device, wherein the control unit is configured to control, based on the detected condition, a parameter of the heating device, such as a heating power. This may effect that the apparatus requires, irrespective of the respective condition of the air, always the same period of time for pre-heating, i.e. for coming into an operational state suitable for roasting coffee beans.

Preferably, the control unit is configured to control, based on the detected condition, the parameter of the heating device such that the heating power is increased (e.g. when the detected condition being the temperature of the air is below a threshold value) or decreased (e.g. when the detected condition being the temperature of the air is above a, or the, threshold value). In other words, in case the apparatus is placed in cold environmental conditions, the control unit may boost the heating device (i.e., increase the heating power) so that the apparatus is quickly in the operational state. In particular, the control unit may control the heating device such that the increased heating power effects no temperature overshoot during roasting. In other words, the control unit may recognize that the cold environmental condition allow an increase of the heating power in such a way that no temperature overshoot is effected during roasting. Thereby, a good quality of the roasting is achieved, while quickly brining the apparatus in the operational state with an increased heating power. In case the apparatus is placed in hot environmental conditions, the control unit may decrease the heating power so that the apparatus is prevented from overheating in the operational state. Thereby, it is in particular prevented that the coffee beans get too hot so that even in hot conditions a consistent quality of the roast is achieved. In other words, it a temperature overshoot in roasting the coffee beans is effectively prevented.

For example, when the detected condition being the temperature is $T_{a-m}$, and a reference temperature is $T_{a-ref}$, the control unit may control the heating device to achieve a target heating power according to the following equation:

$$W_{ph} = i(T_{a-m}, T_{a-ref}).$$

The control of the heating device by the control unit is particularly advantageous, because PID parameters vary during pre-heating with the heating device depending on ambient temperature. For example, if $T_{a-m}$ is low the heater can be boosted without creating a temperature overshoot while keeping pre-heating cycle short for the user. The prevention of such a temperature overshoot is to be avoided because this could be detrimental to product quality of the roasted coffee beans.

The control unit may be configured to control the device exclusively based on the detected condition. This advantageously provides an apparatus designed in a very simple and cost-effective manner, because the control of the device does not require any sensor arranged to directly detect the actual parameters of the one or more conditions effected by the device, such as the temperature inside of the chamber and/or flow parameters of the current of air inside of the chamber. In particular, the control of the device can be effected only with sensors that are not subject to the roasting process, such as to the coffee chaffs. Besides, no complex protection (encapsulating, housing, etc.) in order to prevent the respective sensors from drifting due to the deposition of dirt coming up during the roasting process are required. For example, the one or more sensors can thus be a low-cost sensor(s).

The control unit is configured to bring the apparatus in a warning mode based on the detected condition, such as when the detected condition being the temperature of the air is above or below a defined value and/or when the detected condition being the humidity of the air is above or below a defined value. The warning mode may at least be suitable to prevent the apparatus from malfunctioning and/or the roasting from achieving an inferior quality. Such a malfunctioning may be because of a potential lack of power of the machine. For example, if the user places the apparatus outside during winter, the electric power might not be sufficient to reach the required temperature. Based on the defined value and the detected condition, the control unit identifies such a situation and thus triggers the warning mode. Further, the triggering of the warning mode because of a too high humidity (i.e., the detected condition being the humidity is above the defined value) advantageously effects the ability to warn (e.g., raise alarms) if the humidity level is too high or if it impacts the product quality, because coffee beans (green, pre-roasted, not pre-roasted, etc.) will quickly increase their humidity content in a humid environment.

The apparatus may be configured to generate an output, when the apparatus is in the warning mode. The output may be a signal to generate a warning, such as a visual and/or acoustic warning, on a mobile device such as a smartphone. To this end, the apparatus may comprise a communication interface configured to (e.g., wirelessly) transmit the signal. Additionally or alternatively, the apparatus may comprise an indicator device configured to output the output, e.g. as a visual and/or acoustic output, when the apparatus is in the warning mode. As such, a user of the apparatus easily realizes when there is a risk of the apparatus to malfunction and/or of the apparatus achieving an inferior quality of roasted coffee. According to the invention, the control unit is configured to prevent operation of the device, when the apparatus is in the warning mode. In other words, the apparatus automatically prevents a malfunctioning of the apparatus and/or a roasting achieving only an inferior quality of the roasted coffee.

The apparatus may be a home appliance apparatus. (i.e. a home appliance device or an in-home apparatus). The apparatus may thus have a design for being used in a kitchen of a household, e.g. arranged next to and/or integrated with a coffee grinder and/or a beverage preparation machine. For example, the apparatus is an in-home solution, which particularly allows a fresh and/or personalized roast of coffee beans for the consumer of the coffee beverage. With the apparatus, a home (coffee) roasting solution may thus be provided.

According to a further aspect of the invention, a method for roasting coffee beans is provided. The method comprises the following steps: providing an apparatus (such as the apparatus described above), the apparatus comprising a chamber, a device and one or more sensors arranged to detect a condition of the air that surrounds the apparatus; detecting, with the one or more sensors, a condition of the air that surrounds the apparatus; and roasting coffee beans, in the chamber and by using the device, based on the detected condition.

The step of detecting may be performed in a calibration process and/or in a starting up (i.e., booting) phase of the apparatus, such as in a phase, in which no roasting of coffee beans is performed by the apparatus.

Preferably, coffee beans are roasted in the chamber and by using the device, wherein the one or more sensors detect a condition of the air that surrounds the apparatus and the roasting is adjusted based on this detected condition.

Preferably, the method further comprises the following (optionally consecutive) steps: providing a pre-defined default control parameter for roasting the coffee beans by using the device, wherein the pre-defined default control parameter is related to a pre-defined condition; and adjusting the pre-defined default control parameter based on a difference between the detected condition and the pre-defined default condition. As mentioned, roasting profiles may be provided which each comprise at least one of the pre-defined default control parameters. Full reference is made to the corresponding explanations for the apparatus herein above. Hence, the step of providing a pre-defined default control parameter may be obtained by providing a corresponding roasting profile. This can be done, for instance, by manual input or automatically, e.g. by scanning a barcode of a product to be used; i.e., coffee beans to be roasted. The roasting profiles may be provided directly or retrieved from a storage of the apparatus or from external sources (e.g. a cloud or an external server or a mobile device).

The above description and advantages regarding the apparatus apply analogously to the method.

## 4. Description of a preferred embodiment

In the following, the invention is described exemplarily with reference to the enclosed figures, in which

Figure 1 shows a schematic perspective exploded view of an apparatus according to a preferred embodiment of the invention;

Figure 2 shows a further schematic perspective exploded view of the apparatus shown in figure 1; and

Figure 3 shows a flow chart of a method according to a preferred embodiment of the invention.

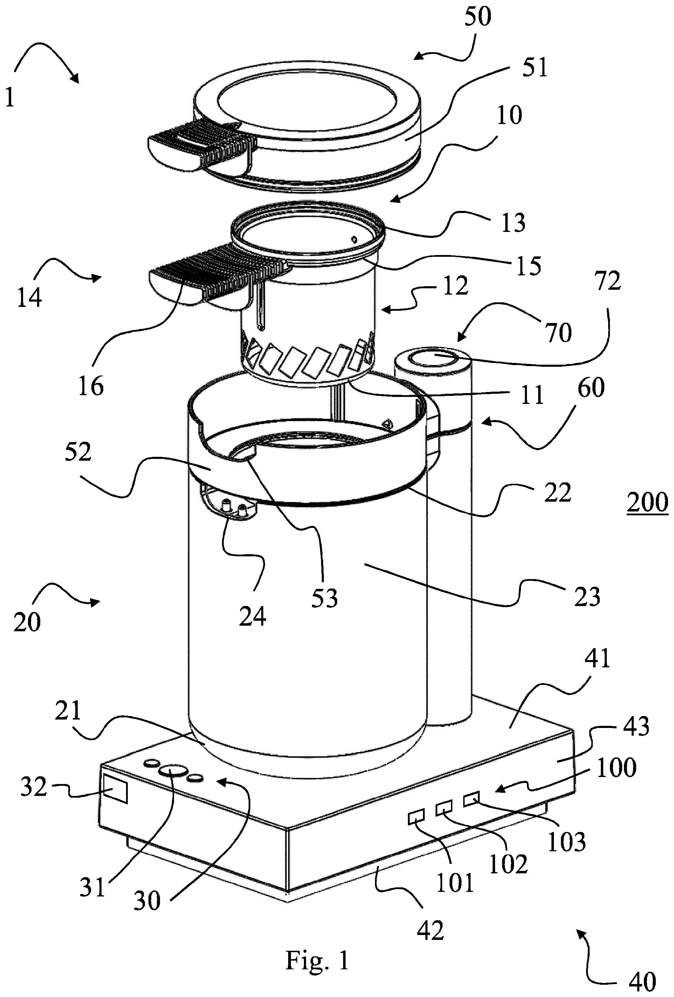

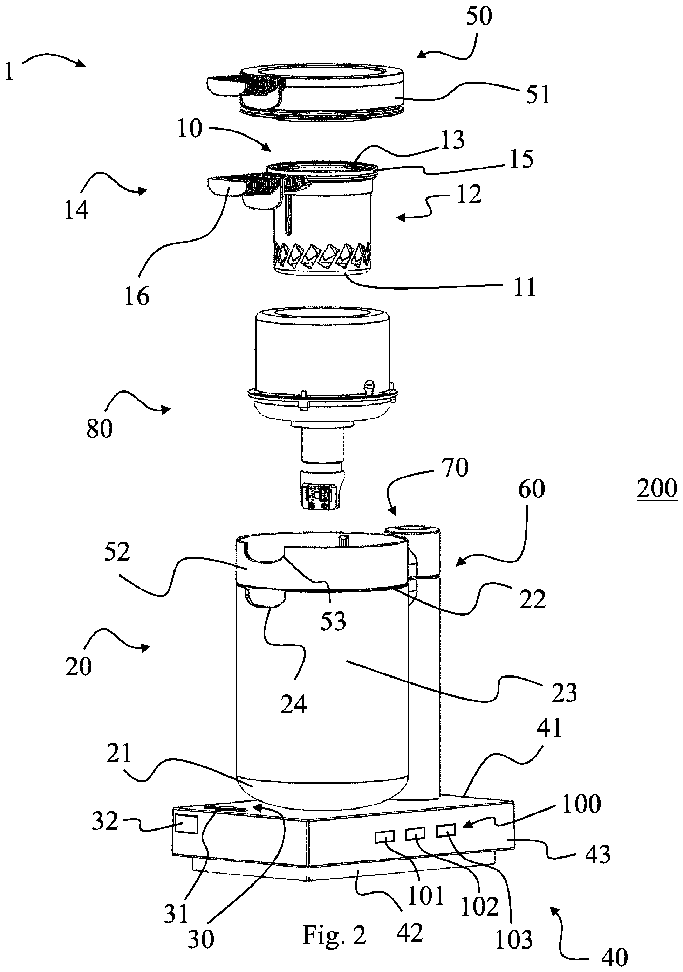

In figures 1 and 2, a preferred embodiment of an apparatus 1 is exemplarily shown. The apparatus 1 is adapted for roasting coffee beans. More specifically, the apparatus 1 is adapted to transform unroasted coffee beans, for example in the form of green and/or dried coffee beans, into roasted coffee beans. More specifically, the roasting of the coffee beans transforms the chemical and physical properties of the unroasted coffee beans in order to produce the characteristic flavor of the roasted coffee beans and, thus, of the coffee beverage, which is prepared from the so roasted coffee beans. That is, the roasting of the coffee beans effects the specific taste of roasted coffee beans, for example, by a Maillard reaction and preferably other chemical reactions. The process of roasting the coffee beans therefore precedes other processes required for preparing the coffee beverage, such as coffee grinding and/or coffee brewing, e.g. coffee extraction.

The apparatus 1 may be adapted for collecting chaffs of the so roasted coffee beans. That is, the unroasted coffee beans typically have a (green and/or dried) skin, in particular when it is first picked off the coffee tree. The chaff may also be referred to as husk of the coffee bean. During roasting of the coffee beans, this skin comes off the coffee beans and thus remains as chaffs. That is, in particular the high temperature of roasting allows the chaffs to be easily removed from the coffee beans, without the need of additional work. Since it is desired that this chaffs of the so roasted coffee beans does not remain with the roasted coffee beans, because, for example, the consumer does not wish to have the chaffs inside of the grinder and/or beverage preparation machine and, thus, inside of the coffee beverage, the chaffs may be collected by the apparatus 1 such that the chaffs will not remain with the finished product, which is the roasted coffee beans.

The apparatus 1, exemplarily shown in figures 1 and 2, is adapted for small-scale coffee roasting (i.e. on-site coffee roasting) and is thus in particular not a large-scale (industrial) roasting apparatus or machine. The apparatus 1 is thus particularly suitable for being used on the side of the business to business (e.g. a coffee shop) and/or of the business to consumer, which is typically the consumer of the coffee beverage. Therefore, the apparatus 1 is preferably a home appliance apparatus. As such, the apparatus 1 may be used in a household or kitchen, in particular on a tabletop, e.g. next to or (functionally) integrated with a coffee grinder and/or a beverage preparation machine. The apparatus 1 therefore preferably has a size and weight for being transportable by a single person, in particular without the need of a dedicated transport mechanism.

The apparatus 1 comprises a chamber 10, in which coffee beans can be received for roasting. The chamber 10 is preferably detachably arranged. The chamber 10 may be designed as a tank or container. The chamber 10 may be delimited by a bottom 11 and a sidewall 12, which extends from the bottom 11. Therefore, when the coffee beans are received in the chamber 10, the coffee beans are preferably supported on the bottom 11 and are at least in part in contact with the sidewall 12. The chamber 10 has a design so that in particular heat and/or heated air can come in contact with the (unroasted) coffee beans in order to roast the coffee beans; for example, the bottom 11 and/or the sidewall 12 is made of a material with a relatively high heat conductivity, e.g. a material comprising or consisting of metal. The bottom 11 and/or the sidewall 12 may comprise one or more holes (i.e. vents), which facilitate that heat and/or a current of air (for heating and/or for cooling) can flow into the chamber 10 to accordingly process the coffee beans. The sidewall 12 preferably comprises vents for the ventilation of the inside of the chamber 10. The vents may be evenly distributed along the sidewall 12. As shown in figure 2, each of the vents may have the form of a rectangle. However, each of the vents is not limited to a specific shape, but can be of any shape. The vents may be provided on a lower portion of the sidewall 12, such as next to the bottom 11.

The chamber 10 may comprise an opening 13 for accessing the chamber 10. As such, via the opening 13, coffee beans can be at least removed from the chamber 10. The opening 13 preferably also facilitates that coffee beans can be inserted into the chamber 10, i.e. the chamber 10 may be filled with coffee beans by way of the opening 13. The opening 13 preferably defines an accessing direction for at least removing coffee beans from the chamber 10 and preferably also for inserting coffee beans into the chamber 10. This accessing direction may extent in a vertical direction, as shown in the figures. As such, the user of the apparatus 1 may access the chamber 10 from above the apparatus 1. The opening 13 is not limited to a specific form. The opening 13 is preferably defined by the sidewall 12, e.g. by the distal end of the sidewall 12. Thus, the opening 13 may be arranged opposite to the bottom 11. For example, the opening 13 may extent in a plane. The opening 13 may have a form corresponding to the bottom 11 and/or may have a round (circular, elliptical, etc.) form, however may also have different forms, e.g. a polygonal, rectangular, or square form.

The apparatus 1 may comprise a receptacle 14, which comprises the chamber 10. As shown in figures 1 and 2, the receptacle 14 may be detachably attached to the apparatus 1, e.g. by way of a form and/or a frictional fit. For example, the receptacle 14 may be detachably attached to the apparatus 1 such that in an attached position, the receptacle 14 has a defined position with respect to the apparatus 1. In other words, the detachably designed attachment of the receptacle 14 preferably effects that, by attaching the receptacle 14 to the apparatus 1, the receptacle 14 is automatically in a position, in which the coffee beans received by the chamber 10 can be accordingly processed, i.e. roasted, by the apparatus 1. The receptacle 14 may comprise a flange 15 for positioning the receptacle 14 with respect to the apparatus 1. For example, the flange 15 may be positioned and supported on a dedicated part of the apparatus 1 in order to accordingly position the receptacle 14 with respect to the apparatus 1. The flange 15 may extent from the sidewall 12 and/or the opening 13.

The receptacle 14 may comprise a handle 16 for manually handling the receptacle 14, e.g. in order to detach the receptacle 14 from the apparatus 1 and/or to attach the receptacle to the apparatus 1. The handle 16 preferably has a design such that the handle 16 can be grasped by a human hand. For example, the handle 16 extends away from the receptacle 14. As such, the handle 16 may extent to be (at least in part) inclined or parallel with respect to the opening 13, e.g. with respect to the plane, in which the opening 13 extends. In other words, the handle 16 may (at least in part) extent to be inclined or perpendicular with respect to the accessing direction, which is defined by the opening 13. Preferably, the handle 16 extends from the flange 15. For secure handling of the receptacle 14 by the handle 16, the handle 16 preferably comprises or consists of a material with low heat conductivity, such as plastic. Thus, the material of the handle may have a lower heat conductivity than of the material of other parts of the receptacle 14, such as of the bottom 11 and/or the sidewall 12 and/or the flange 15, which are preferably made of a material with high heat conductivity, such as metal.

The apparatus 1 may further comprise a housing 20 for housing at least the chamber 10. For example, the housing 20 has a base 21 and a top 22, wherein the chamber 10 may be arranged such that the opening 13 is arranged at the top 22 of the housing 20. As such, the opening 12 is preferably flush with the top 22. The housing 20 may comprise a sidewall 23, which extends from the bottom 21 to the top 22 and preferably circumferentially surrounds the chamber 10. At least part of the housing 20 may be thermally isolated from the chamber 10 and/or the flow device 80. Thereby, this at least part of the housing 20 represents a non-heat sensitive part of the apparatus 1, which may be touched by a user of the apparatus. The thermal isolation may be effected by a thermally insulating material, which is preferably provided between the at least part of the housing 20 on the one hand and the chamber 10 and/or device 80 on the other hand. For example, at least the sidewall 23 is the thermally isolated part of the housing 20.

If the receptacle 14 is present, the housing 20 may be designed to receive the receptacle 14, such that the receptacle 14 is in a defined position, when the receptacle 14 is attached to the housing 20 and thus to the apparatus 1. For example, the housing 20, in particular its top 22, comprises a receiving part or section 24, on which the receptacle 14, e.g. its flange 15 and/or handle 16, can be supported for attaching the receptacle 14 to the apparatus 1. The receiving part 24 may therefore be - at least in part - designed correspondingly (or complementarily) to the flange 15 and/or handle 16, and/or the receiving part 24 may be designed to cooperate with the receptacle 14 and/or flange 15 and/or handle 16 in order to accordingly attach and position the receptacle 14 to the apparatus 1. The receiving part 24 may be formed as a recess in the housing 20. The housing 20 is not limited to a specific form. The housing 20 may have a non-symmetrical or symmetrical form. For example, the housing 20 has substantially the form of a cylinder or a (truncated) cone.

As shown in figure 2, the apparatus 1 further comprises a device 80 for roasting the coffee beans that are received in the chamber 10. The device 80 may comprise a flow device (e.g. comprising a fan) for generating a current of air inside of the chamber 10. This current of air may be used for roasting the coffee beans, which are received in the chamber 10. The device 80 may further comprise a heating device (i.e. heating unit) arranged to heat up air that is used in the chamber 10 for roasting coffee beans, such as the current of air generated by the flow device. Preferably, the heating device heats up (fresh or ambient) air that is drawn from the air 200 that surrounds the apparatus 1 or housing 20. The flow device may then transport this heated up air into the chamber 10. The current of (hot) air comes into contact with the coffee beans and thus roasts the coffee beans. The current of air may be also such that the coffee beans inside of the chamber 10 are agitated or moved, in particular in order to improve the roasting of the coffee beans. Additionally or alternatively, the current of air generated by the device may be used for cooling the (already roasted) coffee beans received in the chamber 10. For example, for cooling the coffee beans, the current of air may be not heated up (by the heating device), but only transport (fresh) air such as ambient air. Thus, for providing the current of air for cooling, the flow device may simply remain in an activated state, whereas the heating device is simply put in a deactivated state, i.e. turned off.

The apparatus 1 further comprises a (electronic) control unit configured to control the device 80, such as the flow device and/or the heating device. Thereby, the control unit accordingly controls the roasting of the coffee beans, e.g. according to a preprogrammed program, such as including a predefined roasting profile and/or temperature profile. The control unit is thus functionally connected to the device 80, such as the flow device and/or the heating device, to accordingly roast and/or cool the coffee beans received by the chamber 10.

As shown in figures 1 and 2, the apparatus 1 may comprise a user interface 30, which is preferably functionally connected to the control unit. The user interface 30 facilitates that the user of the apparatus 1 can accordingly control the apparatus 1, in particular for roasting the coffee beans and/or for terminating roasting of the coffee beans. The user interface 30 may comprise one or more (e.g. only three) control elements 31, e.g. in the form of one or more buttons or other touch sensitive elements (touchscreen, etc.), for controlling the apparatus 1. For example, the one or more control elements 31 comprise an element for booting (i.e., starting up) the apparatus 1, in particular for starting the roasting process, and for bringing the apparatus 1 into a deactivated state and/or standby state, such as for stopping or terminating the roasting process. The control elements 31 may also comprise a control element for powering up (and turning off) the apparatus 1 (e.g. an on/off control element) and/or a control element for adjusting a roasting level of the coffee beans to be roasted in the chamber 10. The user interface 30 may comprise only one control element for starting and stopping and for powering up (and turning off) the apparatus 1. Stopping of the roasting process may be also automatically carried out by the control unit, e.g. after a predetermined (roasting) time has lapsed. The user interface 30 is preferably arranged on a front side of the apparatus 1, i.e. a user side of the apparatus 1.

The device 80 and/or the control unit may be provided in (i.e. housed by) the housing 20 and/or a further housing part (40). The user interface 30 may be at least in part provided on the housing 20 and/or the further housing part 40. The further housing part 40 may be provided such that the housing 20, e.g. its bottom 21, is arranged on a top 41 of the further housing part 40. Preferably, the further housing part 40 forms the bottom or support of the apparatus 1. Thus, the further housing part 40 may be designed such that the apparatus 1 can be placed on a surface such as a tabletop. Therefore, the further housing part 40 preferably comprises a bottom 42, which is opposite to the top 41, wherein the bottom 42 is adapted to be placed on a surface such as a tabletop. The device 80, the control unit and/or the user interface 30 may be also provided in the housing 20, so that, for example, the further housing part 40 is not necessary. Therefore, the housing 20, e.g. its bottom 21, may also form the bottom of the apparatus 1.

The apparatus 1 may further comprise a power inlet, e.g. in the form of a power plug. By way of the power inlet, the parts of the apparatus 1 requiring energy, such as electrical energy (voltage and/or current), in particular the device, the control unit, and/or the user interface 30, can be supplied with energy. The power plug may be provided on a rear side of the apparatus 1 and/or on the housing 20 or the further housing part 40.

The apparatus 1 may further comprises a chaffs collector 50 for collecting the chaffs of the coffee beans, which are roasted by the chamber 10. The chaffs collector 50 may comprise a compartment 51, in which the chaffs are collected and prevented from returning to the chamber 10. For example, the chaffs collector 50 may comprise an inlet, which allows only a unidirectional flow of the chaffs so that the chaffs are collected by the chaffs collector 50; thus, the inlet may allow a flow of the chaffs 50 into the compartment 51, but prevent a flow of the chaffs out of the compartment 51, in particular towards the chamber 10. In order to provide a particularly good collection of the chaffs by the chaffs collector 50, the chaffs collector 50 and the (current of air generating) device can be accordingly arranged to one another. For example, the device 80 can be arranged such that the current of air, which is generated by the flow device, drives the chaffs of the coffee beans towards the chaffs collector 50, such that (in the closed position of the chaffs collector 50, see below) the chaffs are collected by the chaffs collector 50.

The chaffs collector 50 may be designed to selectively open the chaffs collector 50 or, if present, the compartment 51 in order to throw away or otherwise use the collected chaffs. The chaffs collector 50 may be detachably arranged, so that the chaffs collector 50 can be detached from the apparatus 1, e.g. in order to easily throw away the chaffs. For example, the chaffs collector 50 is detachably mounted to the housing 20 (for example on the rear side of the housing 20), e.g. by an accordingly designed joint. The chaffs collector 50 may form the top of the apparatus 1 and/or is arranged at the top 22 of the housing 20.

The chaffs collector 50 may be movably arranged with respect to a specific movement axis in order to be moved between a closed and an open position, i.e. into the closed position or into the open position. The specific movement axis is preferably a movement axis, which is fixed with respect to the apparatus 1. A "fixed movement axis" is to be understood such that the position and orientation of the movement axis is fixed with respect to the apparatus 1, in particular fixed with respect to the housing 20 and/or the further housing part 40.

In the closed position, the chaffs collector 50 covers the opening 12 of the chamber 10. In this position, roasting of the coffee beans inside of the chamber 10 can thus be carried out. That is, in the closed position, the chaffs collector 50 covers the opening 12 such that accessing the chamber 10 via the opening 12 is not possible. In the closed position, the chaffs collector 50 is preferably flush with the housing 20. As such, the chaffs collector 50 may form together with the housing 20 a geometrical form, which is - disregarding a possible (sealed) gap between the collector 50 and the housing 20 - continuously formed from the housing 20 to the chaffs collector 50. For example, the chaffs collector 50 and the housing 20 together form a substantially symmetrical form in the closed position, such as a substantially cylindrical or (truncated) conical form.

The chaffs collector 50 is therefore preferably correspondingly formed to the housing 20, for example with a round form having a diameter, which corresponds to the diameter of the cross-section of the housing 20, which comprises the top 22. The chaffs collector 50 may have a substantially cylindrical form.

In the open position, the chaffs collector 50 does not cover the opening 12 of the chamber 10. Thus, the chamber 10 is accessible (for a human hand) via the opening 12 for removing coffee beans from the chamber 10, and preferably also for inserting coffee beans into the chamber 10. In the open position, the chamber 10 is therefore accessible along the before mentioned accessing direction, which is defined by the opening 12. In the open position, the chaffs collector 50 is thus moved away from a user side of the apparatus 1, in particular towards a rear side of the apparatus 1, which is opposite to the user side of the apparatus 1. The user side is typically the side of the apparatus 1, which comprises the user interface 30 and/or which is directed towards the user operating the apparatus 1. As such, the chaffs collector 50 is in a position, in which the user of the apparatus 1 can easily access and focus on the chamber 10, which receives the (roasted) coffee beans. In the open position, there is also not the risk that the user is burned because of the heated chaffs collector 50. In the open position, the opening 12 is preferably completely uncovered. That is, when viewed in a top plan view of the apparatus 1 (i.e. in the vertical direction or in the accessing direction), the opening 12 and the chaffs collector 50 preferably do not overlap.

As shown in figures 1 and 2, the movement axis may be a rotational movement axis. Thereby, a rotational movement about the movement axis moves the chaffs collector 50 between the closed and the open position. The chaffs collector 50 may be mounted to the housing 20 and/or the further housing part 40 in order to be movably arranged with respect to the movement axis. The movement axis may be defined by a joint or hinge 60. For example, the joint 60 comprises a first joint element (e.g. on the side of the chaffs collector 50) and a second joint element (e.g. on the side of the housing 20 or housing part 40), which are connected to each other such that the joint elements are relatively movable to each other with respect to the movement axis in order to thus provide the specific movement axis. The invention is, however, not limited to a rotational movement axis as the movement axis. For example, additionally or alternatively, the movement axis may be a linear movement axis so that a linear movement along this movement axis moves the chaffs collector 50 between the closed position and open position. As such, the joint 60 may provide a sliding movement, e.g. by connecting a first joint element to the second joint element such that one of the joint elements can slide with respect to or in the respective other joint element.

In the preferred embodiment shown in figures 1 and 2, the chaffs collector 50 is movably arranged with respect to only one specific movement axis. As such, the joint 60 preferably provides only one degree of freedom. The chaffs collector 50 can therefore be brought into the open position or closed position with a single movement with respect to the movement axis, which thus particularly improves the ease of use of the apparatus 1. The invention is, however, not limited to have the chaffs collector 50 to be movably arranged with respect to only one specific movement axis. The chaffs collector 50 may be also movably arranged with respect to more than one specific movement axis, for example such that the chaffs collector 50 is first moved with respect to a first movement axis and, subsequently, moved with respect to a second movement axis in order to be moved into the open or closed position. These movement axes may define the same manner of movement (e.g. rotational or linear) or may define different manners of movement (e.g. one for rotational movement and one for linear movement).

The apparatus 1 may comprise a locking mechanism 70, which is adapted to selectively lock or unlock the chaffs collector 50 with respect to the chamber 10, preferably with respect to the housing 20 and/or receptacle 14. If the below described receiving element 52 for receiving the chaffs collector 50 is present, the locking mechanism 70 is adapted to selectively lock or unlock the receiving element 52 with respect to the chamber 10; the explanations of the locking mechanism 70 with respect to the chaffs collector 50 then apply analogously to the locking mechanism 70 for locking or unlocking the receiving element 52 with respect to the chamber 10.

When the chaffs collector 50 is locked with respect to the chamber 10, the chaffs collector 50 is prevented from moving from the closed position into the open position. In order to lock the chaffs collector 50 with respect to the chamber 10, the locking mechanism 70 may be adapted to cooperate with a fixed part of the apparatus 1, e.g. with the housing 20 and/or the receptacle 14 and/or the opening 13; thus, the chaffs collector 50 can be securely locked with respect to the chamber 10. For example, the locking mechanism 70 comprises a locking part, which is provided on the side of or on the chaffs collector 50, wherein the locking part is adapted to cooperate with a correspondingly formed part of said fixed part, e.g. by engaging each other, in order to be or remain locked with respect to the chamber 10. The locking mechanism 70 may comprise an operating element 72 (e.g. a button or a touch sensitive element), which is adapted to unlock the locking mechanism 70, i.e. to unlock the chaffs collector 50 with respect to the chamber 10. The operating element 72 may be provided on the side of the chaffs collector 50 or on the side of the chamber 10. The operating element 72 may be arranged on the joint 60, on the receptacle 14, or on the housing 20.

The chaffs collector 50 may be arranged to automatically move into an intermediate position, when the locking mechanism 70 is operated to unlock the chaffs collector 50 with respect to the chamber 10. In the intermediate position, the opening 12 is less covered by the chaffs collector 50 than in the closed position. In the intermediate position, the opening 12 is preferably more covered by the chaffs collector 50 than in the open position. That is, in the intermediate position, the opening 12 and the chaffs collector 50 may partially overlap. Preferably, in the intermediate position the chaffs collector 50, e.g. a side edge of the chaffs collector 50, and the opening 12, e.g. a (circumferential) side edge of the opening 12, form a gap, such as a gap having only a few millimeters.

For automatically moving the chaffs collector 50 from the closed position into the intermediate position, the apparatus 1, e.g. the chaffs collector 50, the housing 20, and/or the joint 60, may comprise an elastic element such as a (weak) spring; i.e. the chaffs collector 50 may be spring loaded. The elastic element may be provided such that in the closed position the elastic element is biased to move the chaffs collector 50 into the intermediate position. By unlocking the locking mechanism 70, the elastic element thus moves the chaffs collector 50 into the intermediate position by the elastic restoring force of the elastic element. Once having reached the intermediate position, the user of the apparatus 1 can then, e.g. manually, move the chaffs collector 50 further into the open position.

For locking the chaffs collector 50 with respect to the chamber 10, the user may simply manually move the chaffs collector 50 into the closed position. When the chaffs collector 50 arrives in the closed position, the locking mechanism 70 then automatically or manually locks the chaffs collector 50 with respect to the chamber 10, e.g. by a biasing element (spring, etc.), which is biased to bring the locking mechanism 70 into the locked position, when the chaffs collector 50 is in the closed position.

As shown in figures 1 and 2, the movement axis may extend in a vertical direction, and the opening 12 is arranged so that the chamber 10 can be accessed also along this vertical direction. That is, the movement axis of the chaffs collector 50 is substantially parallel to the accessing direction of the chamber 10. The chaffs collector 50 can thus be moved in a plane, which is substantially parallel to the opening 12 (e.g. a plane, in which the opening 12 extents) and/or a surface, on which the apparatus 1 is arranged, in order to move the chaffs collector 50 between the open position and the closed position. The apparatus 1 may therefore have, both in the open position and in the closed position, (substantially) the same height, in particular differing in only few millimeters. In the intermediate position, the apparatus 1 may almost have the same height as in the open position and/or closed position, e.g. differing in only few millimeters. Said height is measured in the vertical direction, when the apparatus 1 is arranged to be operated, i.e. in particular for roasting coffee beans, for example when the opening 12 is arranged to access the chamber 10 along the vertical direction. The height may thus be measured from the surface, on which the apparatus 1 is arranged.

As can be seen in figures 1 and 2, the apparatus 1 or chaffs collector 50 may comprise a receiving element 52, which is adapted to receive the chaffs collector 50, preferably such that the chaffs collector 50 is in a defined position and/or orientation with respect to the receiving element 52. Therefore, the chaffs collector 50 may be arranged to be detachably provided with respect to the receiving element 52. For example, the receiving element 52 comprises a section 53, which is formed to receive the chaffs collector 50 such that the chaffs collector 50 is in the defined position and/or orientation. The section 53 may be correspondingly or complementary formed to a section or part of the chaffs collector 50, such as complementary formed to the handle of the chaffs collector 50. The section 53 may be formed as a recess in the receiving element 52. The receiving element 52 may be moveably arranged in order to effect that the chaffs collector 50 is moveably arranged with respect to the movement axis in order to move between the closed position and the open position. For example, the receiving element 52 comprises the joint 60 or at least part of the joint 60, such a one of the joint elements.

In other embodiments the movement axis may also extend differently, such as in a horizontal direction. As such, the movement axis may be substantially perpendicular to the accessing direction of the chamber 10. Thus, an angle between the chaffs collector 50 and the opening 12 (e.g. a plane, in which the opening 12 extents) and/or the surface, on which the apparatus is arranged, varies, when the chaffs collector 50 is moved between the open position and the closed position. More specifically, said angle may be substantially 0° in the closed position, wherein said angle is substantially 90°, when the chaffs collector 50 is in the open position. As such, the apparatus 1 may have, in the open position, a higher height than in the closed position.

The receptacle 14 may be arranged such that by detaching the receptacle 14 from the apparatus 1, e.g. from the housing 20, the chaffs collector 50 can be moved or pushed into the open position. As such, the user does not need to directly touch the chaffs collector 50 in order to move the chaffs collector 50 into the open position. For example, by moving the receptacle 14 along the vertical direction, the receptacle 14 may come into (mechanical) contact with the chaffs collector 50 to thereby move the chaffs collector 50 into the open position. For example, the flange 15 and/or a part of the handle 16, e.g. a part connecting the handle 16 with the chamber 10 and/or flange 15, comes into (mechanical) contact with (a lower side of) the chaffs collector 15, when the receptacle 14 is moved to be detached from the apparatus 1, e.g. from the housing 20. Therefore, with a single (handling) movement of the receptacle 14, for example along the vertical direction, both the receptacle 14 is detached from the apparatus 1 and the chaffs collector 50 is moved into the open position. Therefore, the operation of the machine is significantly simplified.

Additionally or alternatively, the chaffs collector 50 may be moved into the open position and into the closed position by directly acting on the chaffs collector 50. For example, the chaffs collector 50 may comprise a handle for handling the chaffs collector 50 to be moved between the closed position and the open position. This handle may - as for the optional handle 16 - also be made of a material, which comprises a material with low heat conductivity and/or a material with a lower heat conductivity than other parts of the chaffs collector 50. For example, the material may be or comprise plastic. Therefore, there is not the risk that the user's hand is burned, when touching the handle of the (possibly heated) chaffs collector 50.

As shown in figures 1 and 2, the apparatus further comprises one or more (dedicated) sensors 100 arranged to detect (i.e., measure) one or more conditions of the air 200 that surrounds the apparatus 1 (i.e., ambient air). The air 200 may represent the air surrounding the housing 20 and/or housing part 40. As exemplarily shown, the one or more sensors 100 may comprise a plurality (such as three) sensors 101, 102, 103, each sensor arranged to detect a respective condition of the air 200. The one or more conditions may comprise pressure, temperature, and/or humidity. For example, the sensor 101 is a pressure sensor arranged to detect the condition being pressure, the sensor 102 is a temperature sensor arranged to detect the condition being temperature, and the sensor 103 is a humidity sensor arranged to detect the condition being humidity. The invention is however not limited to the type and number of sensors. The apparatus 1 may also comprise only one sensor that is configured to detect a plurality of conditions of the air 200, such as pressure, temperature, and humidity.

The one or more sensors 100 are not limited to a specific position as long as it or they can detect the condition of the air 200. As exemplarily shown, the one or more sensors 100 are arranged on a section being a housing part, or section, 43 of the housing 40. This position on the section, i.e. housing part 43, is particularly advantageous, because this section is subjected to, or in contact with, the air 200 and thermally isolated from the device 80 and chamber 10 and, preferably, from the chaffs collector 50; the thermal isolation is in particular such that there is no danger of touching hot parts that are heated up due to the coffee roasting. Hence, the one or more sensors 100 can reliably detect the condition of the air 200 without any adverse influence by other parts of the apparatus 1, such as parts radiating heat due to the roasting process (e.g., the device 80 and chamber 10. The invention is however not limited to this position of the section. For example, the section may be part of, or comprised by, the housing 20 (such as of, or by, the thermally insulated part of the housing 20 and/or the sidewall 23) or any other part of the apparatus 1 that effects that the one or more sensors 100 are arranged to detect the condition of the air 200. The one or more sensors 100 may be arranged at the back of the apparatus 1 and/or on the user side of the apparatus 1.

The one or more sensors 100 are not limited to a specific type of sensor. Preferably, the one or more sensors 100 are arranged and/or configured to detect exclusively the (respective) condition of the air 200. In particular, due to the specific arrangement of the one or more sensors 100, thereby effecting no or at least less exposure to wear and/or dirt (e.g. because of coffee beans, coffee chaffs, or smoke), a complex design (encapsulation, housing, etc.) is not required for the one or more sensors 100. For example, low-cost sensors can be used as the one or more sensors 100. The temperature sensor 102 is in particular not required to operate in a large temperature range, since the temperature range of the air 200 is significantly smaller than the temperature range in the chamber 10.

The one or more sensors 100 (and thus the sensors 101-103) are functionally connected to the control unit. Hence, the control unit can receive the one or more conditions detected by the one or more sensors 100 and thus execute control commands for the apparatus 1 based on the at least one detected condition. More specifically, the control unit is configured to control the device 80 based on the detected condition. Such a control may be realized in different ways. For example, the control unit is configured to control the device 80 based on a pre-defined default control parameter, and to adjust this parameter based on a difference between the detected condition and a pre-defined default condition related to the pre-defined default control parameter. The apparatus 1 may store, and/or may be configured to retrieve, the pre-defined default control parameter and/or pre-defined default condition. Additionally or alternatively, the apparatus 1 may store, and/or may be configured to retrieve, one or more roasting profiles, wherein the control unit is configured to control the device based on the one or more roasting profiles and to adjust or adapt the one or more roasting profiles based on the detected condition. The roasting profiles each may comprise the or at least one of the pre-defined default control parameters.

If the device 80 comprises the optional flow device, the control unit may be configured to control, based on the detected condition such as the air pressure (detected by the sensor 101), a parameter of the flow device. This parameter may be a flow rate and/or a fan speed to be set by the flow device. For example, when the detected condition being the pressure of the air 200 increases, e.g., from or above a defined threshold value (which may be the pre-defined condition), the control unit may control the flow device such that the flow rate and/or fan speed is decreased (or increased). That is, the control unit is configured to control the flow device based on the pre-defined default control parameter such that the flow device is operated with a corresponding (pre-defined) parameter such as a (pre-defined) flow rate and/or fan speed. The control unit will however adjust the pre-defined control parameter if there is a difference between the detected condition, such as pressure, and the pre-defined default condition, such as a default pressure (e.g., a pressure in standard conditions, which may be 1,01325 bar or 1 atm). Hence, the control unit will adjust the pre-defined control parameter based on the difference, e.g. such that the flow rate and/or fan speed is decreased (or increased). Similarly, when the detected condition being the pressure of the air 200 decreases, e.g., from or below a (or the) defined threshold value, the control unit may control the flow device such that the flow rate and/or fan speed is decreased (or increased).

With such a configuration of the control unit controlling the flow device based on the detected condition, the apparatus 1 may be designed such that it does not comprise any sensor for detecting the actual flow rate of the current of air generated by the flow device (inside of the chamber). Thereby, a very simple and cost-effective design of the apparatus 1 may be provided. In general, with the configuration of the control unit controlling the device 80 based on the detected condition, the apparatus 1 can be used in different environmental conditions (i.e., in different conditions of the air 200) without an adverse impact on the roasting quality. In other words, the apparatus 1 provides a consistent quality of the coffee roasting in different environmental conditions, without requiring the user to adjust roasting parameters in the apparatus 1.

If the device 80 comprises the optional heating device, the control unit may be configured to control, based on the detected condition such as the temperature (detected by the sensor 102), a parameter of the heating device. This parameter may be the heating power. For example, this control may be such that the heating power is increased or decreased. Preferably, when the detected condition being the temperature is below a defined threshold value (which may be the pre-defined condition), the control unit may control the heating device such that the heating power is increased. In other words, the control unit may control the heating device such that the heating device undergoes a heating power boost. That is, the control unit is configured to control the heating device based on the pre-defined default control parameter such that the heating device is operated with a corresponding (pre-defined) parameter such as a (pre-defined) heating power. The control unit will however adjust the pre-defined control parameter if there is a difference between the detected condition, such as temperature, and the pre-defined default condition, such as a default temperature (e.g., a temperature in standard conditions, which may be 20°C). Hence, the control unit will adjust the pre-defined control parameter based on the difference, e.g. such that the heating power is increased (or decreased).

The increase of heating power may be applied in the phase of pre-heating the heating device. As such, the apparatus 1 can be quickly brought into an operational state ready for coffee roasting even in cold conditions with low temperatures. Similarly, when the detected condition being the temperature is above a, or the, defined threshold value, the control unit may control the heating device such that the heating power is decreased. As such, in particular the heating power in the pre-heating phase can be decreased, because the ambient temperature facilitates that the apparatus 1 is quickly in the operational phase even without a high heating power. Hence, energy consumption of the apparatus 1 can be decreased. Besides, a temperature overshoot during roasting, which adversely affects the coffee roasting result, is effectively prevented.

In an embodiment, the control unit may be configured to control the device 80 exclusively based on the detected condition, i.e. on one or more environmental conditions of the air 200. As such, the apparatus 1 may not comprise any sensor in addition to the one or more sensors 100. Thereby, a very simple and cost-effective design of the apparatus 1 may be provided.

According to the invention, the control unit is configured to bring the apparatus 1 in a warning mode based on the detected condition. The warning mode may be able to prevent the apparatus 1 from malfunctioning because of the respectively detected condition, such as because of an inadmissibly high (or low) temperature and/or humidity. Such a malfunction may encompass an inferior result of the coffee roasting. For example, when the detected condition being the temperature of the air 200 is above or below a (further) defined (threshold) value, the control unit may bring the apparatus 1, e.g. from on operational or standby mode, into the warning mode. Additionally or alternatively, when the detected condition being the humidity is above or below a defined value, the control unit may bring the apparatus 1, e.g. from on operational or standby mode, into the warning mode. The control unit is configured to prevent operation of the device 80, when the apparatus 1 is in the warning mode. For example, the control unit may interrupt an energy supply to the device 80, when the apparatus 1 is in the warning mode.

As shown in figures 1 and 2, the apparatus 1 may comprise an indicator device 32. The indicator device 32 may be configured to generate an output such as a visual and/or acoustic output. When the apparatus 1 is in the warning mode, the indicator device 32 may generate the output. Thereby, the user of the apparatus 1 is informed (or warned) that the apparatus 1 is in the warning mode. The user may then provide appropriate measures (e.g., shutting down or turning off the apparatus 1) to prevent the apparatus 1 from malfunctioning. The indicator device 32 is preferably arranged at a position, where the user of the apparatus 1 can easily perceive the output. For example, the indicator device 32 may be arranged on the user side of the apparatus 1 and/or integrated with the user interface 31.

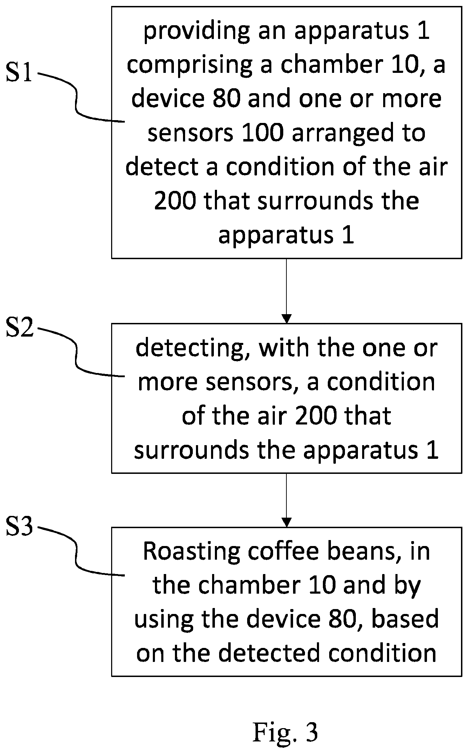

Figure 3 shows a flow chart of a method according to a preferred embodiment of the invention. As shown in figure 3, the method comprises the following preferably consecutive steps S1 to S3. In step S1, an apparatus is provided, such as the apparatus 1 described above. The apparatus comprises a chamber (e.g., the chamber 10 described above), a device (e.g., the device 80 describe above) and one or more sensors arranged to detect a condition of the air that surrounds the apparatus (e.g., the one or more sensors 100 described above). In step S2, the one or more sensors detect a condition of the air that surrounds the apparatus. And in step S3, roasting of coffee beans is performed, in the chamber and by using the device, based on the detected condition.

Preferably, the step S2 is performed in a calibration process and/or in a starting up (i.e., booting) phase of the apparatus, such as in a phase, in which no roasting of coffee beans is performed by the apparatus.

The method may further comprise the steps of: a) providing a pre-defined default control parameter for roasting the coffee beans by using the device 80, wherein the pre-defined default control parameter is related to a pre-defined condition; and b) adjusting the pre-defined default control parameter based on a difference between the detected condition and the pre-defined default condition. Hence, subsequent roasting is performed with the adjusted pre-defined default control parameter. The step a) may be performed before step S2. The step a) may be obtained by providing a corresponding roasting profile comprising the or at least one of the pre-defined default control parameters.

It should be clear to a skilled person that the embodiments shown in the figures are only preferred embodiments, but that, however, also other designs of an apparatus 1 can be used.

### Claims

1. An apparatus (1) for roasting coffee beans, the apparatus (1) comprising:

   a chamber (10) in which coffee beans can be received for roasting,
   a device (80) for roasting the coffee beans received in the chamber (10),
   a control unit configured to control the device (80), and
   one or more sensors (100) arranged to detect a condition of the air (200) that surrounds the apparatus (1),
   wherein the control unit is configured to control the device (80) based on the detected condition,
   the apparatus (1) for roasting coffee beans is **characterized in that** the control unit is configured to bring the apparatus (1) in a warning mode based on the detected condition, such as when the detected condition being the temperature of the air (200) is above or below a defined value and/or when the detected condition being the humidity of the air (200) is above or below a defined value, wherein the control unit is configured to prevent operation of the device (80) when the apparatus (1) is in the warning mode.

2. The apparatus (1) according to claim 1, wherein the control unit is configured to control the device (80) based on a pre-defined default control parameter, and to adjust this parameter based on a difference between the detected condition and a pre-defined default condition related to the pre-defined default control parameter, wherein, preferably, the apparatus (1) stores, and/or is configured to retrieve, the pre-defined default control parameter and/or pre-defined default condition.

3. The apparatus (1) according to claim 1 or 2, wherein the apparatus (1) stores, and/or is configured to retrieve, one or more roasting profiles, and wherein the control unit is configured to control the device (80) based on the one or more roasting profiles and to adjust or adapt the one or more roasting profiles based on the detected condition, wherein preferably the roasting profiles each comprise at least one pre-defined default control parameter.

4. The apparatus (1) according to any one of the preceding claims, wherein the condition comprises pressure, temperature, and/or humidity.

5. The apparatus (1) according to any one of the preceding claims, wherein the one or more sensors (100) are arranged to exclusively detect the condition.

6. The apparatus (1) according to any one of the preceding claims, wherein the apparatus (1) comprises a section (43) that is subjected to or in contact with the air that surrounds the apparatus (1), and wherein at least one of the one or more sensors (100) is arranged on the section (43).

7. The apparatus (1) according to any one of the preceding claims, wherein the apparatus (1) comprises a thermally isolated section (43) that is thermally isolated, such as by a thermal insulation, from the device (80) and/or chamber (10), and wherein at least one of the one or more sensors (100) is arranged on the thermally isolated section (43), wherein the section (43) preferably comprises the thermally isolated section (43).

8. The apparatus (1) according to any one of the preceding claims, wherein the apparatus (1) comprises a housing (20, 40) that houses at least the chamber (10) and the device (80), wherein the housing (20, 40) preferably comprises the section (43) and/or the thermally isolated section (43).

9. The apparatus (1) according to any one of the preceding claims, wherein the device (80) comprises a flow device arranged to generate a current of air in the chamber (10) for roasting coffee beans, and wherein the control unit is configured to control, based on the detected condition, a parameter of the flow device, such as a flow rate and/or a fan speed, preferably such that the flow rate and/or fan speed is decreased, e.g. when the detected condition being the pressure of the air (200) increases, or increased, e.g. when the detected condition being the pressure of the air (200) decreases, wherein the apparatus (1) preferably does not comprise a sensor for detecting the actual flow rate of the current of air generated by the flow device.

10. The apparatus (1) according to any one of the preceding claims, wherein the device (80) comprises a heating device arranged to heat up air that is used in the chamber (10) for roasting coffee beans, such as the current of air generated by the flow device, wherein the control unit is configured to control, based on the detected condition, a parameter of the heating device, such as a heating power, preferably such that the heating power is increased, such as when the detected condition being the temperature of the air (200) is below a threshold value, or decreased, such as when the detected condition being the temperature of the air (200) is above a threshold value.

11. The apparatus (1) according to any one of the preceding claims, wherein the control unit is configured to control the device (80) exclusively based on the detected condition.

12. The apparatus (1) according to any one of the preceding claims, wherein the apparatus (1) is preferably configured to generate an output, when the apparatus (1) is in the warning mode, wherein the output is preferably a signal to generate a warning, such as a visual and/or acoustic warning, e.g. on a mobile device, and/or wherein the apparatus (1) preferably comprises an indicator device (32) configured to output the output, e.g. as a visual and/or acoustic output.

13. The apparatus (1) according to any one of the preceding claims, wherein the apparatus (1) is a home appliance apparatus.

14. A method for roasting coffee beans, the method comprising the following steps:

providing an apparatus (1), such as the apparatus (1) according to any one of the preceding claims, the apparatus (1) comprising a chamber (10), a device (80) and one or more sensors (100) arranged to detect a condition of the air (200) that surrounds the apparatus (1);
detecting, with the one or more sensors (100), a condition of the air (200) that surrounds the apparatus (1); and
roasting coffee beans, in the chamber (10) and by using the device (80), based on the detected condition, the method for roasting coffee beans is **characterized in that** by the following steps:

bringing the apparatus (1) in a warning mode based on the detected condition, such as when the detected condition being the temperature of the air (200) is above or below a defined value and/or when the detected condition being the humidity of the air (200) is above or below a defined value, and
preventing operation of the device (80), when the apparatus (1) is in the warning mode.

**15.** The method according to claim 14, further comprising the steps of:

> providing a pre-defined default control parameter for roasting the coffee beans by using the device (1), wherein the pre-defined default control parameter is related to a pre-defined condition, and
> adjusting the pre-defined default control parameter based on a difference between the detected condition and the pre-defined default condition.

**Patentansprüche**

**1.** Einrichtung (1) zum Rösten von Kaffeebohnen, die Einrichtung (1) umfassend:

> eine Kammer (10), in der Kaffeebohnen zum Rösten aufgenommen werden können,
> eine Vorrichtung (80) zum Rösten der Kaffeebohnen, die in der Kammer (10) aufgenommen werden,
> eine Steuereinheit, die konfiguriert ist, um die Vorrichtung (80) zu steuern, und
> einen oder mehrere Sensoren (100), die angeordnet sind, um einen Zustand der Luft (200) zu erfassen, die die Einrichtung (1) umgibt,
> wobei die Steuereinheit konfiguriert ist, um die Vorrichtung (80) basierend auf dem erfassten Zustand zu steuern, die Einrichtung (1) zum Rösten von Kaffeebohnen,
>
> **dadurch gekennzeichnet ist, dass** die Steuereinheit konfiguriert ist, um die Einrichtung (1) in einen Warnmodus zu versetzen, basierend auf dem erfassten Zustand, wie wenn der erfasste Zustand, der die Temperatur der Luft (200) ist, über oder unter einem definierten Wert liegt und/oder wenn der erfasste Zustand, der die Feuchtigkeit der Luft (200) ist, über oder unter einem definierten Wert liegt, wobei die Steuereinheit konfiguriert ist, um den Betrieb der Vorrichtung (80) zu verhindern, wenn die Einrichtung (1) in dem Warnmodus ist.

**2.** Einrichtung (1) nach Anspruch 1, wobei die Steuereinheit konfiguriert ist, um die Vorrichtung (80) basierend auf einem vordefinierten Standardsteuerparameter zu steuern, und um diesen Parameter basierend auf einer Differenz zwischen dem erfassten Zustand und einem vordefinierten Standardzustand, der sich auf den vordefinierten Standardsteuerparameter bezieht, anzupassen, wobei vorzugsweise die Einrichtung (1) den vordefinierten Standardsteuerparameter und/oder den vordefinierten Standardzustand speichert und/oder konfiguriert ist, um diesen abzurufen.

**3.** Einrichtung (1) nach Anspruch 1 oder 2, wobei die Einrichtung (1) ein oder mehrere Röstprofile speichert und/oder konfiguriert ist, um diese abzurufen, und wobei die Steuereinheit konfiguriert ist, um die Vorrichtung (80) basierend auf dem einen oder den mehreren Röstprofilen zu steuern und um das eine oder die mehreren Röstprofile basierend auf dem erfassten Zustand anzupassen oder abzugleichen, wobei vorzugsweise die Röstprofile jeweils mindestens einen vordefinierten Standardsteuerparameter umfassen.

**4.** Einrichtung (1) nach einem der vorstehenden Ansprüche, wobei der Zustand Druck, Temperatur und/oder Feuchtigkeit umfasst.

**5.** Einrichtung (1) nach einem der vorstehenden Ansprüche, wobei der eine oder die mehreren Sensoren (100) angeordnet sind, um ausschließlich den Zustand zu erfassen.

**6.** Einrichtung (1) nach einem der vorstehenden Ansprüche, wobei die Einrichtung (1) einen Bereich (43) umfasst, der der Luft, die die Einrichtung (1) umgibt, ausgesetzt ist oder mit dieser in Kontakt steht, und wobei mindestens einer des einen oder der mehreren Sensoren (100) an dem Bereich (43) angeordnet ist.

**7.** Einrichtung (1) nach einem der vorstehenden Ansprüche, wobei die Einrichtung (1) einen thermisch isolierten Bereich (43) umfasst, der, wie durch eine Wärmeisolierung, von der Vorrichtung (80) und/oder Kammer (10) thermisch isoliert ist, und wobei mindestens einer des einen oder der mehreren Sensoren (100) an dem thermisch isolierten Bereich (43) angeordnet ist, wobei der Bereich (43) vorzugsweise den thermisch isolierten Bereich (43) umfasst.

**8.** Einrichtung (1) nach einem der vorstehenden Ansprüche, wobei die Einrichtung (1) ein Gehäuse (20, 40) umfasst, das mindestens die Kammer (10) und die Vorrichtung (80) beherbergt, wobei das Gehäuse (20, 40) vorzugsweise den Bereich (43) und/oder den thermisch isolierten Bereich (43) umfasst.

**9.** Einrichtung (1) nach einem der vorstehenden Ansprüche, wobei die Vorrichtung (80) eine Strömungsvorrichtung umfasst, die angeordnet ist, um einen Luftstrom in der Kammer (10) zum Rösten von Kaffeebohnen zu erzeugen, und wobei die Steuereinheit konfiguriert ist, um, basierend auf dem erfassten Zustand, einen Parameter der Strömungsvorrichtung zu steuern, wie eine Strömungsgeschwindigkeit und/oder eine Lüftergeschwindigkeit, vorzugsweise derart, dass die Strömungsgeschwindigkeit und/oder Lüftergeschwindigkeit verringert wird, z. B. wenn der erfasste Zustand, der der Druck der Luft (200) ist, erhöht wird oder erhöht ist, z. B. wenn der erfasste Zustand, der der Druck der Luft (200) ist, reduziert wird, wobei die Einrichtung (1) vorzugsweise keinen Sensor zum Erfassen der tatsächlichen Strömungsgeschwindigkeit des durch die Strömungsvorrichtung erzeugten Luftstroms umfasst.

**10.** Einrichtung (1) nach einem der vorstehenden Ansprüche, wobei die Vorrichtung (80) eine Heizvorrichtung umfasst, die angeordnet ist, um Luft zu erwärmen, die in der Kammer (10) zum Rösten von Kaffeebohnen verwendet wird, wie den durch die Strömungsvorrichtung erzeugten Luftstrom, wobei die Steuereinheit konfiguriert ist, um basierend auf dem erfassten Zustand einen Parameter der Heizvorrichtung zu steuern, wie eine Heizleistung, vorzugsweise derart, dass die Heizleistung erhöht wird, wie wenn der erfasste Zustand, der die Temperatur der Luft (200) ist, unter einem Grenzwert liegt oder reduziert wird, wie wenn der erfasste Zustand, der die Temperatur der Luft (200) ist, über einem Grenzwert liegt.

**11.** Einrichtung (1) nach einem der vorstehenden Ansprüche, wobei die Steuereinheit konfiguriert ist, um die Vorrichtung (80) ausschließlich basierend auf dem erfassten Zustand zu steuern.

**12.** Einrichtung (1) nach einem der vorstehenden Ansprüche, wobei die Einrichtung (1) vorzugsweise konfiguriert ist, um eine Ausgabe zu erzeugen, wenn die Einrichtung (1) in dem Warnmodus ist, wobei die Ausgabe vorzugsweise ein Signal ist, um eine Warnung zu erzeugen, wie eine visuelle und/oder akustische Warnung, z. B. auf einer mobilen Vorrichtung, und/oder wobei die Einrichtung (1) vorzugsweise eine Anzeigevorrichtung (32) umfasst, die konfiguriert ist, um die Ausgabe auszugeben, z. B. als eine visuelle und/oder akustische Ausgabe.

**13.** Einrichtung (1) nach einem der vorstehenden Ansprüche, wobei die Einrichtung (1) eine Haushaltsgeräteinrichtung ist.

**14.** Verfahren zum Rösten von Kaffeebohnen, das Verfahren umfassend die folgenden Schritte:

Bereitstellen einer Einrichtung (1), wie die Einrichtung (1) nach einem der vorstehenden Ansprüche, die Einrichtung (1) umfassend eine Kammer (10), eine Vorrichtung (80) und einen oder mehrere Sensoren (100), die angeordnet sind, um einen Zustand der Luft (200) zu erfassen, die die Einrichtung (1) umgibt;
Erfassen, mit dem einen oder den mehreren Sensoren (100), eines Zustands der Luft (200), die die Einrichtung (1) umgibt; und
Rösten von Kaffeebohnen in der Kammer (10) und durch Verwenden der Vorrichtung (80) basierend auf dem erfassten Zustand,
wobei das Verfahren zum Rösten von Kaffeebohnen **gekennzeichnet ist durch** die folgenden Schritte:
Versetzen der Einrichtung (1) in einen Warnmodus basierend auf dem erfassten Zustand, wie wenn der erfasste Zustand, der die Temperatur der Luft (200) ist, über oder unter einem definierten Wert liegt und/oder wenn der erfasste Zustand, der die Feuchtigkeit der Luft (200) ist, über oder unter einem definierten Wert liegt, und Verhindern des Betriebs der Vorrichtung (80), wenn die Einrichtung (1) in dem Warnmodus ist.

**15.** Verfahren nach Anspruch 14, ferner umfassend die Schritte:

Bereitstellen eines vordefinierten Standardsteuerparameters zum Rösten der Kaffeebohnen durch Verwenden der Vorrichtung (1), wobei der vordefinierte Standardsteuerparameter sich auf einen vordefinierten Zustand bezieht, und
Anpassen des vordefinierten Standardsteuerparameters basierend auf einer Differenz zwischen dem erfassten Zustand und dem vordefinierten Standardzustand.

**Revendications**

**1.** Appareil (1) permettant de torréfier des grains de café, l'appareil (1) comprenant :

une chambre (10) dans laquelle des grains de café peuvent être reçus pour être torréfiés,

un dispositif (80) permettant de torréfier les grains de café reçus dans la chambre (10),

une unité de commande configurée pour commander le dispositif (80), et

un ou plusieurs capteurs (100) agencés pour détecter un état de l'air (200) qui entoure l'appareil (1),

dans lequel l'unité de commande est configurée pour commander le dispositif (80) sur la base de l'état détecté,

l'appareil (1) permettant de torréfier des grains de café est

**caractérisé en ce que** l'unité de commande est configurée pour amener l'appareil (1) dans un mode d'avertissement sur la base de l'état détecté, par exemple lorsque l'état détecté, qui est la température de l'air (200), est supérieur ou inférieur à une valeur définie et/ou lorsque l'état détecté, qui est l'humidité de l'air (200), est supérieur ou inférieur à une valeur définie, dans lequel l'unité de commande est configurée pour empêcher le fonctionnement du dispositif (80) lorsque l'appareil (1) est dans le mode d'avertissement.

2. Appareil (1) selon la revendication 1, dans lequel l'unité de commande est configurée pour commander le dispositif (80) sur la base d'un paramètre de commande par défaut prédéfini, et pour ajuster ledit paramètre sur la base d'une différence entre l'état détecté et un état par défaut prédéfini lié au paramètre de commande par défaut prédéfini, dans lequel, de préférence, l'appareil (1) stocke, et/ou est configuré pour récupérer, le paramètre de commande par défaut prédéfini et/ou l'état par défaut prédéfini.

3. Appareil (1) selon la revendication 1 ou 2, dans lequel l'appareil (1) stocke, et/ou est configuré pour récupérer, un ou plusieurs profils de torréfaction, et dans lequel l'unité de commande est configurée pour commander le dispositif (80) sur la base du ou des profils de torréfaction et pour ajuster ou adapter le ou les profils de torréfaction sur la base de l'état détecté, dans lequel, de préférence, les profils de torréfaction comprennent chacun au moins un paramètre de commande par défaut prédéfini.

4. Appareil (1) selon l'une quelconque des revendications précédentes, dans lequel l'état comprend la pression, la température et/ou l'humidité.

5. Appareil (1) selon l'une quelconque des revendications précédentes, dans lequel le ou les capteurs (100) sont agencés pour détecter exclusivement l'état.

6. Appareil (1) selon l'une quelconque des revendications précédentes, dans lequel l'appareil (1) comprend une section (43) qui est soumise à l'air qui entoure l'appareil (1) ou est en contact avec celui-ci, et dans lequel au moins l'un parmi le ou les capteurs (100) est agencé sur la section (43).

7. Appareil (1) selon l'une quelconque des revendications précédentes, dans lequel l'appareil (1) comprend une section isolée thermiquement (43) qui est isolée thermiquement, par exemple par une isolation thermique, du dispositif (80) et/ou de la chambre (10), et dans lequel au moins l'un parmi le ou les capteurs (100) est agencé sur la section isolée thermiquement (43), dans lequel la section (43) comprend de préférence la section isolée thermiquement (43).

8. Appareil (1) selon l'une quelconque des revendications précédentes, dans lequel l'appareil (1) comprend un boîtier (20, 40) qui loge au moins la chambre (10) et le dispositif (80), dans lequel le boîtier (20, 40) comprend de préférence la section (43) et/ou la section isolée thermiquement (43).

9. Appareil (1) selon l'une quelconque des revendications précédentes, dans lequel le dispositif (80) comprend un dispositif d'écoulement agencé pour générer un courant d'air dans la chambre (10) pour la torréfaction de grains de café, et dans lequel l'unité de commande est configurée pour commander, sur la base de l'état détecté, un paramètre du dispositif d'écoulement, tel qu'un débit et/ou une vitesse de ventilateur, de préférence de telle sorte que le débit et/ou la vitesse de ventilateur sont diminués, par exemple lorsque l'état détecté, qui est la pression de l'air (200), augmente, ou sont augmentés, par exemple lorsque l'état détecté, qui est la pression de l'air (200), diminue, dans lequel l'appareil (1) ne comprend de préférence pas de capteur permettant de détecter le débit réel du courant d'air généré par le dispositif d'écoulement.

10. Appareil (1) selon l'une quelconque des revendications précédentes, dans lequel le dispositif (80) comprend un dispositif de chauffage agencé pour chauffer de l'air qui est utilisé dans la chambre (10) pour la torréfaction de grains de café, tel que le courant d'air généré par le dispositif d'écoulement, dans lequel l'unité de commande est configurée pour commander, sur la base de l'état détecté, un paramètre du dispositif de chauffage, tel qu'une puissance de chauffage, de préférence de telle sorte que la puissance de chauffage est augmentée, par exemple lorsque l'état détecté, qui est la température de l'air (200), est inférieur à une valeur seuil, ou est diminuée, par exemple lorsque l'état détecté, qui est la température de l'air (200), est supérieur à une valeur seuil.

11. Appareil (1) selon l'une quelconque des revendications précédentes, dans lequel l'unité de commande est configurée pour commander le dispositif (80) exclusivement sur la base de l'état détecté.

12. Appareil (1) selon l'une quelconque des revendications précédentes, dans lequel l'appareil (1) est de préférence configuré pour générer une sortie, lorsque l'appareil (1) est dans le mode d'avertissement, dans lequel la sortie est de préférence un signal pour générer un avertissement, tel qu'un avertissement visuel et/ou sonore, par exemple sur un dispositif mobile, et/ou dans lequel l'appareil (1) comprend de préférence un dispositif indicateur (32) configuré pour délivrer en sortie la sortie, par exemple, en tant que sortie visuelle et/ou acoustique.

13. Appareil (1) selon l'une quelconque des revendications précédentes, dans lequel l'appareil (1) est un appareil électroménager.

14. Procédé permettant de torréfier des grains de café, le procédé comprenant les étapes suivantes :

fourniture d'un appareil (1), tel que l'appareil (1) selon l'une quelconque des revendications précédentes, l'appareil (1) comprenant une chambre (10), un dispositif (80) et un ou plusieurs capteurs (100) agencés pour détecter un état de l'air (200) qui entoure l'appareil (1) ;
détection, à l'aide du ou des capteurs (100), d'un état de l'air (200) qui entoure l'appareil (1) ; et
torréfaction de grains de café, dans la chambre (10) et à l'aide du dispositif (80), sur la base de l'état détecté, le procédé permettant de torréfier des grains de café est

**caractérisé en ce que** par les étapes suivantes :
amener l'appareil (1) dans un mode d'avertissement sur la base de l'état détecté, par exemple lorsque l'état détecté, qui est la température de l'air (200), est supérieur ou inférieur à une valeur définie et/ou lorsque l'état détecté, qui est l'humidité de l'air (200), est supérieur ou inférieur à une valeur définie, et empêcher le fonctionnement du dispositif (80), lorsque l'appareil (1) est dans le mode d'avertissement.

15. Procédé selon la revendication 14, comprenant en outre les étapes consistant à :

fournir un paramètre de commande par défaut prédéfini pour la torréfaction des grains de café à l'aide du dispositif (1), dans lequel le paramètre de commande par défaut prédéfini est lié à un état prédéfini, et
ajuster le paramètre de commande par défaut prédéfini sur la base d'une différence entre l'état détecté et l'état par défaut prédéfini.

Fig. 1

Fig. 2

S1 — providing an apparatus 1 comprising a chamber 10, a device 80 and one or more sensors 100 arranged to detect a condition of the air 200 that surrounds the apparatus 1

S2 — detecting, with the one or more sensors, a condition of the air 200 that surrounds the apparatus 1

S3 — Roasting coffee beans, in the chamber 10 and by using the device 80, based on the detected condition

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019373940 A1